# EUROPEAN PATENT SPECIFICATION

(11) **EP 1 994 286 B1**
(45) Date of publication and mention of the grant of the patent: **31.03.2010**
(21) Application number: 07704033.5
(22) Date of filing: 19.01.2007
(51) Int. Cl.: F15B 1/24

(54) **ACCUMULATOR**
AKKUMULATOR
ACCUMULATEUR

(30) Priority: 10.03.2006 SE 0600524
(43) Date of publication of application: 26.11.2008
(73) Proprietor: Haldex Traction AB, 261 24 Landskrona (SE)
(72) Inventor: DAVIDSSON, Per-Olof, S-216 18 Limhamn (SE)
(74) Representative: Petri, Stellan
(86) International application number: PCT/EP2007/050565
(87) International publication number: WO 2007/104592

(56) References cited:
- DE-A1- 10 108 121
- DE-A1-102004 033 502
- GB-A- 361 210
- US-A1- 2004 238 054

## Description

### Field of the Invention

The present invention relates to an accumulator for a hydraulic system and a method of de-airing a hydraulic system comprising such an accumulator. It furthermore relates to a hydraulic system and an all-wheel drive system incorporating said hydraulic system.

### Background of the Invention

Hydraulic systems are normally equipped with a pump that provides high-pressure oil to actuators and control valves. An accumulator can be connected to the high-pressure side where it inter alia can serve to remove pressure fluctuations in the hydraulic system. See for example document DE 10 108 121. The pressure at the high-pressure side should be limited, though, and this is traditionally done by providing a pressure-overflow valve, which opens at a set pressure. Due to the large tolerances that normally exist for the pressure in the accumulator and for the opening pressure of the pressure-overflow valve, the preset opening pressure of the pressure-overflow valve must be set at a level that is much higher than the nominal pressure when the accumulator is filled. This may result in an unnecessarily high load being imposed on the pump and the motor, as the pump will pump against a filled accumulator.

### Summary of the Invention

It is an object of the present invention to mitigate, alleviate or eliminate one or more of the above-identified deficiencies and disadvantages singly or in any combination. This is in one aspect achieved by an accumulator for a hydraulic system, wherein the accumulator comprises a liner, a piston and a housing, defining a pressure chamber, for receiving hydraulic fluid at high pressure, wherein the piston is biased towards an end position of the pressure chamber for interacting with the hydraulic fluid in the pressure chamber, and the piston is movable in a predetermined range for accumulating hydraulic fluid. The accumulator furthermore has at least one outlet port in a sidewall of the liner which outlet port is covered by the piston in said predetermined range and is uncovered when the piston has moved a predetermined distance from the end position. In one embodiment, the liner around the pressure chamber may be made of a polymeric material, such as poly phenylene sulfide. In another embodiment, the accumulator further comprises a passage in order to interconnect the low-pressure chamber with a low-pressure side of the accumulator. In yet another embodiment, the accumulator further comprises a passage that interconnects the low-pressure chamber with a reservoir. In still another embodiment, the accumulator further comprises a spring at a low-pressure side of the accumulator, for biasing the piston towards a top end position in the pressure chamber. In another embodiment, the accumulator further comprises a drain of a control component, which drain is connected to a low-pressure side of the accumulator. In yet another embodiment, the accumulator further comprises a spillway overflow at a low-pressure side of the accumulator between an interior of the accumulator and a channel leading to a reservoir. In still another embodiment, the at least one outlet port of the accumulator has a diameter that is smaller than a width of a piston ring of the piston.

In a second aspect of the invention, a hydraulic system comprises a hydraulic pump, a control component and a hydraulic actuator, wherein the system further comprises an accumulator according to any previous embodiment.

In a third aspect, an all-wheel drive coupling comprises a hydraulic system according to the second aspect.

In a fourth aspect, a method is provided for de-airing a hydraulic system comprising an accumulator according to the first aspect. The method comprises the steps of closing associated hydraulic control valves, and operating a hydraulic pump for a predetermined time period, for emptying the accumulator of substantially all air.

### Brief Description of the Drawings

The accumulator of the present invention will be more readily understood by reading the following detailed description in combination with the appended non-limiting drawings, where
Fig. 1 is a sectional view of an accumulator according to the invention,
Fig. 2 is a plan view of parts of the accumulator according to Fig. 1, and
Fig. 3 is a schematical view of a hydraulic system including an accumulator according to the invention.

### Detailed Description of Embodiments

Below, several embodiments of the invention will be described with references to the drawings. These embodiments are described for illustrative purposes only, in order to enable a skilled person to carry out the invention and to disclose the best mode. However, such embodiments do not limit the invention. Moreover, other combinations of the different features are possible within the scope of the invention.

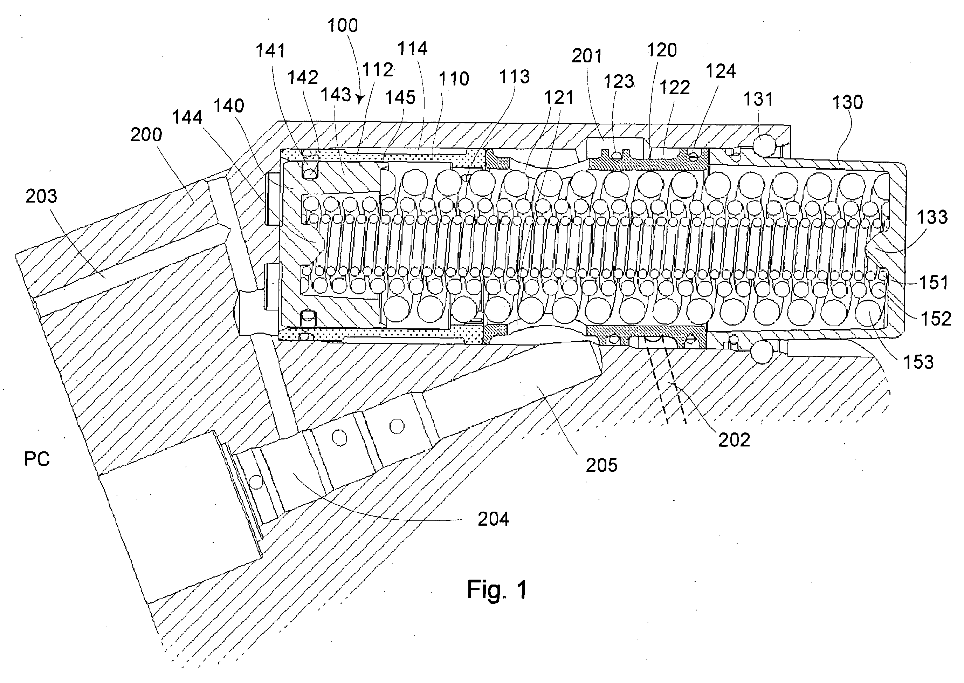

An accumulator **100** according to an embodiment of the present invention is shown in a sectional view in Fig. 1, mounted in a housing **200.** The accumulator **100** includes, in the shown embodiment, a body comprising three parts, namely a liner **110,** a spacer **120** and a lid **130,** all being substantially cylindrical having a substantially circular cross-section. The liner **110** cooperates with a piston **140,** which is adapted for reciprocating movement within the liner **110.**

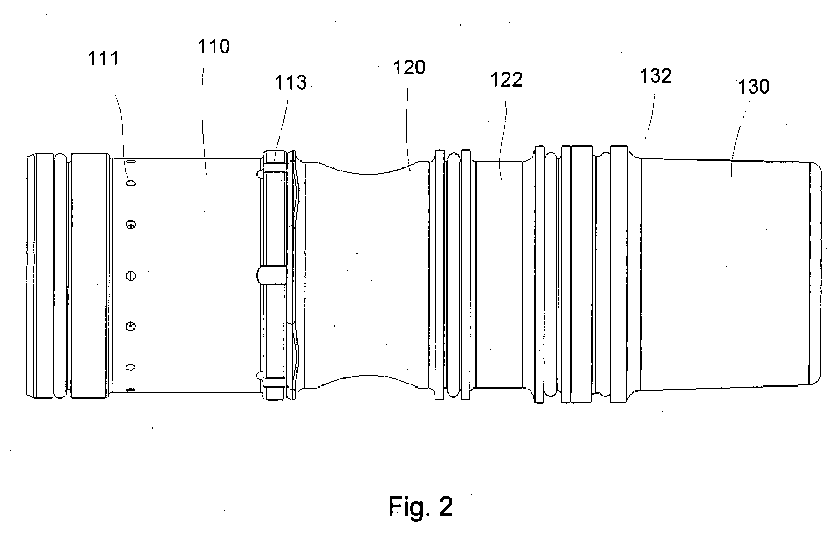

The liner **110** is formed with one or several outlet ports **111,** see Fig. 2, which are located in a sidewall **112** of the liner **110.** The ports **111** are generally placed at the same distance from a top of the liner **110.** Furthermore, the liner **110** may have one or several inlet channels **113,** which are located at a bottom part of the liner (one can be seen in Fig. 1). These channels **113** extend from the outside surface to the inside surface of the liner **110.** In order to reduce the risk of burrs forming at the outlet ports **111,** the liner **110** can be made from a polymeric material, such as PPS (poly phenylene sulfide), which should be possible to precision mould to tight tolerance.

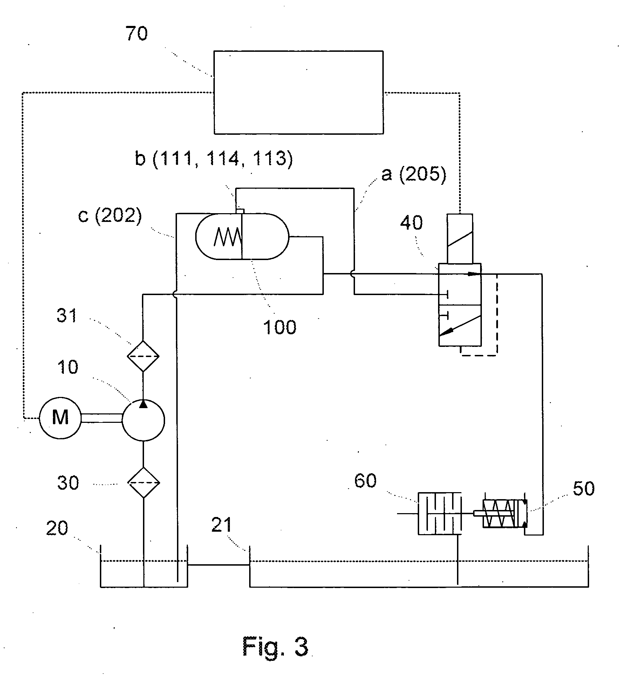

The spacer **120** can in one embodiment be provided with one or several holes **121** in a sidewall, and these serve to open a passage from the outside to the inside of the accumulator and vice versa. The bottom part of the spacer **120,** in use, may comprise a channel **122** on its outside, which channel is enclosed by O-rings **123, 124** located in matching peripheral grooves. The O-rings seal off the channel **122** against the housing **200.** A recess **201** in the surrounding housing **200** provides a passage from the interior of the accumulator **100** through the hole **121** to the channel **122.** The recess **201** is located in the generally upper part of the housing **200,** when the accumulator **100** is mounted in a use position, and thus forms a spillway overflow. The channel **122** can be in communication with a discharge line **202,** which line **202** communicates with a first reservoir **20** (Fig. 3).

The piston **140** may in one embodiment be provided with a piston ring **141** of a suitable material, such as PTFE (Teflon®), which ring is housed in a circumferential groove in the piston **140**. An O-ring **142** located radially inside of the piston ring **141** in the groove can stabilize the piston ring **141.** The piston **140** may in one embodiment have a peripheral sidewall **143** that extends from the top towards the bottom, forming a cavity at the center of the piston **140.** In the shown embodiment, the piston **140** can further be equipped with a central protrusion **144** on a lower (right) side, which is used for guiding a central compression spring **151,** and the sidewall **143** can have a skirt **145** at its bottom outer periphery for guiding an outer compression spring **153.** The central cavity can be adapted for accommodating one or several compression springs **151**, **152, 153.** A person skilled in the art can replace the three compression springs with any spring means that will bias the piston towards a top end position.

The liner **110,** with the piston **140,** and the spacer **120** are placed inside the housing **200,** which is formed with channels and cavities for a connected hydraulic system. The liner **110,** the piston **140** and the housing **200** define a pressure chamber where high-pressure fluid can be accommodated. A chamber **114** is formed radially outside of the liner **110,** between the liner and the housing **200.** The springs **151, 152, 153** are placed inside the liner **110** and the spacer **120** and the lid **130** is pressed against the force of the springs until the lid **130** contacts the spacer. The lid **130** is then secured by some retaining means, such as tangential retainer pins **131,** that acts on a flange **132** on the lid; see Fig. 2. The springs **151, 152, 153** bias the piston **140**. towards a top end position, defined by the housing **200,** and shown in Fig. 1. The lid may also be formed with a central protrusion **133,** for receiving a spring. Even though three springs are shown, it will be evident to a person skilled in the art that other spring configurations are possible, as mentioned above, and a gas spring is also possible.

The inlet port(s) **111** may in one embodiment have a diameter, or size of the port in the longitudinal direction, that is smaller than the width of the piston ring **141.** This might reduce damage to the piston ring **141** from the inlet port(s) **111,** as the piston ring **141** is depressed past the inlet port(s) **111.**

The housing **200** accommodating the accumulator **100** may in one embodiment be formed with a channel **203** that is connected with a hydraulic pump **10,** see Fig. 3, at one end and the top of the accumulator at the other end. A receiving hole **204** is provided for a control valve **40,** which is connected to the hydraulic pump **10** and the accumulator **100** at one end and a hydraulic actuator **50** at another end, when the control valve **40** is set to activate the actuator **50.** The receiving hole **204** is connected to a drain **205,** where hydraulic fluid is discharged from the control valve. The drain **205** is in fluid communication via the hole **121** of the spacer with the interior of the accumulator **100.**

The control valve **40** discharges fluid via a drain **205** in fluid communication with the interior of the accumulator **100,** when the control valve is set to deactivate the hydraulic actuator **50.** The amount of fluid inside the accumulator increases and eventually the accumulator is filled with fluid. Any additional fluid will be discharged via the recess **201,** forming the spillway overflow, to the channel **122.** The channel **122** communicates with a designated reservoir **20** via the discharge line **202,** and the pump can then use the fluid again. The accumulator will then always be filled with substantially the same amount of hydraulic fluid, both in rest and in operation. This minimizes the changes of the fluid level in the reservoir **20,** since the accumulator **100** will serve as an additional reservoir. Some change is probably inevitable, e.g. due to elasticity of the hydraulic system.

A hydraulic system is shown in Fig. 3, where an accumulator **100** of the present invention can be fitted. In this type of system, the same hydraulic fluid is normally used for the hydraulics as for lubrication and cooling of actuators, clutches and differential brakes. This means that hydraulic fluid gets polluted during normal operation, especially inside components subject to wear, such as the clutch and differential brake, and this pollution or debris is normally removed in a sieve and a filter. Too much debris may risk clogging the sieve and filter, though, and this should be avoided. This is done by utilizing a spring side (or low-pressure side) of the accumulator **100** as a way of minimizing the fluid circulation, from clean areas to polluted areas.

The hydraulic system comprises in the shown embodiment an electrically driven hydraulic pump **10,** which draws hydraulic fluid from a first reservoir **20.** The fluid passes a sieve **30** before the pump and a filter **31** after the pump and the fluid is then supplied to a hydraulic control valve **40.** An accumulator **100** is also connected to the pump **10** and the inlet side of the hydraulic control valve **40.** The control valve is in turn connected to a hydraulic cylinder **50** that is coupled to e.g. a clutch **60** for engaging an all-wheel drive coupling. The hydraulic cylinder and the control valve drain off fluid to a spring side of the accumulator **100** through pipe **a,** via the control valve **40.** The accumulator has a bypass passage **b (111, 114** and **113** in Figs. 1 and 2), which leads fluid from a high-pressure side to a low-pressure side of the accumulator. This passage **b** limits the pressure on the high-pressure side of the system. When the spring side of the accumulator **100** is full, surplus fluid is drained via a spillway overflow, **201** in Fig. 1, through line **c** to the reservoir **20.** An electronic controller **70,** such as an ECU, controls the operation of the pump **10** and the hydraulic control valve **40.** An additional reservoir **21** is arranged, which may be in fluid communication with the first reservoir **20** and the clutch **60.** The actuator of the above system can be replaced by another device, such as a differential brake, that also pollutes the hydraulic system.

When the hydraulic system is operating, the hydraulic pump **10** supplies pressurized fluid to the channel **203.** This channel transfers the fluid to the control valve **40** and to the top of the accumulator **100.** When a certain fluid pressure has been reached, the force on the piston **140** from the fluid pressure surpasses that of the springs **151, 152, 153** and the piston **140** is pushed towards the bottom (to the right in Fig. 1). The travel of the piston is determined by the fluid pressure (and the spring force that the fluid pressure opposes), and the maximum pressure is obtained when the piston reaches its bottom end position. When the piston ring **141** now is moved past the outlet ports **111** in the liner **110,** fluid is brought from the top side of the accumulator **100** via the outlet ports **111** to the chamber **114** outside of the liner **110.** From there it may in one embodiment be brought to the low-pressure side of the accumulator via the inlet slots **113.** The pressure decreases above the piston **140** and the springs **151, 152, 153** push the piston so that the piston ring **141** again closes off the outlet ports **111.** The inlet slots **113** could be replaced by a drain (not shown) that leads from the chamber **114** to the reservoir **20,** or by ports similar to the outlet ports **111.**

In Fig. 1, the housing **200** is shown as a large block-like component that also has channels and holes for an associated hydraulic system, and the housing also accommodates the control valve **40.** The housing can instead be a separate item, which mainly functions to seal off the upper part of the pressure chamber PC and forms the low-pressure chamber **113** on an outside of the liner **110.** The housing can hence be manufactured of a thin metal plate, and mainly be configured to accommodate the accumulator **100.** The housing can comprise one, two or more portions.

The present invention is described as a specific embodiment, but can just as well be any accumulator that can deliver hydraulic fluid at a working pressure, and which accumulator is refilled by an intermittently or continuously driven pump. The accumulator should be provided with holes or channels that are opened at a certain pressure in the pressure chamber of the accumulator, as a consequence of a piston uncovering at least one port in a liner of the accumulator, and the fluid being supplied to a low-pressure side of the accumulator or to a reservoir. The low-pressure side can also be supplied with other drains of clean hydraulic fluid, for introducing a system with clean fluid that is separated from a system with polluted fluid.

The object of the present invention can also be achieved in other ways. In one alternative embodiment, the piston is rotatably arranged about a longitudinal axis of the accumulator. The piston can be biased by a torsion spring that forces the piston towards an end position, where the volume of the pressure chamber is minimal. The piston is rotated by the hydraulic fluid to a position where the outlet port(s) is uncovered, for limiting the pressure in the pressure chamber.

In one embodiment, the liner 110 comprises at least one outlet port 111 in a sidewall 112 of the liner 110, which outlet port 111 is adapted to allow hydraulic fluid to flow from the pressure chamber PC to a low-pressure chamber 114, when the piston 140 has been depressed past the outlet port 111, in order to limit the pressure in the pressure chamber PC.

In one embodiment of the present invention, a method can be used for de-airing an accumulator 100 in a hydraulic system. This is achieved by operating the pump 10 that supplies hydraulic fluid to the accumulator 100, up to a pressure where the piston 140 in the accumulator 100 uncovers the outlet port(s) 111 of the liner 110. In this way, substantially all of the air in the pressure chamber PC in the accumulator 100 is forced out with some of the hydraulic fluid. The pressure can be kept at a high level for a predetermined time, for ensuring that virtually all air is forced out of the pressure chamber PC. The pump 10 can then be operated in another way that suits the demands of the associated hydraulic system.

The above-mentioned hydraulic fluid can be any suitable fluid, such as hydraulic oil, mineral oil, water, glycol ethers, rapeseed-based hydraulic oil etc, depending on the operating characteristics of the associated hydraulic system.

The accumulator of the present invention leads to several advantages over prior art, such as very fast response, since the accumulator functions as a capacitor in an electric circuit, almost unlimited delivery time of nearly maximum hydraulic pressure, if an intermittently operated pump interacts with the accumulator, and the possibility of reducing the pump size, if intermittent operation and reduced maximum pressure is utilized. The last effect comes from the built-in pressure reduction in the accumulator, which prevents the pump from pumping against a filled accumulator, until the pressure-overflow valve has opened.

Even though the present invention is mentioned in relation to an all-wheel drive system, it will be evident for a person skilled in the art to incorporate an accumulator of the invention in another hydraulic environment, for obtaining the same advantages.

References to right and left are merely made for illustrative purposes and are to be interpreted together with the drawings. Top refers to the piston side of the accumulator and bottom to the lid side. It is also used for determining relative position on a specific part, meaning in the direction towards the top or bottom, respectively.

## Claims

1. An accumulator (100) for a hydraulic system, the accumulator (100) comprising
a liner (110), a piston (140) and a housing (200), defining a pressure chamber (PC), for receiving hydraulic fluid at high pressure,
wherein the piston (140) is biased towards an end position of the pressure chamber (PC) for interacting with the hydraulic fluid in the pressure chamber (PC), said piston (140) being movable in a predetermined range for accumulating hydraulic fluid,
**characterized by** at least one outlet port (111) in a sidewall (112) of the liner (110), which outlet port (111) is covered by said piston (140) in said predetermined range and is uncovered when said piston (140) has moved a predetermined distance from said end position.

2. An accumulator (100) according to claim 1, wherein a low-pressure chamber (114) receives hydraulic fluid that is discharged from the at least one outlet port (111).

3. An accumulator (100) according to claim 1, wherein the liner (110) around the pressure chamber (PC) is made of a polymeric material, such as poly phenylene sulfide.

4. An accumulator (100) according to claim 2, wherein a passage (113) is provided in order to interconnect the low-pressure chamber (114) with a low-pressure side of the accumulator (100).

5. An accumulator (100) according to claim 2, wherein a passage is provided in order to interconnect the low-pressure chamber (114) with a reservoir (20).

6. An accumulator (100) according to claim 1, 2, 3 or 4, further comprising a spring (151, 152, 153) at a low-pressure side of the accumulator (100), for biasing the piston (140) towards a top end position in the pressure chamber (PC).

7. An accumulator (100) according to any previous claim, further comprising a drain (205) of a control component (40), which drain is connected to a low-pressure side of the accumulator (100).

8. An accumulator (100) according to claim 1, further comprising a spillway overflow (201) at a low-pressure side of the accumulator between an interior of the accumulator (100) and a channel (202) leading to a reservoir (20).

9. An accumulator (100) according to claim 1, wherein the at least one outlet port (111) has a diameter that is smaller than a width of a piston ring (141) of the piston (140) .

10. A hydraulic system comprising a hydraulic pump (10), a control component (40) and a hydraulic actuator (50), wherein the system further comprises an accumulator (100) according to any previous claim.

11. An all-wheel drive coupling comprising a hydraulic system according to claim 10.

## Patentansprüche

1. Druckspeicher (100) für ein Hydrauliksystem, wobei der Druckspeicher (100) Folgendes umfasst:
eine Laufbuchse (110), einen Kolben (140) und ein Gehäuse (200), die eine Druckkammer (DK) zum Empfang von Hydraulikfluid auf hohem Druck definieren,
wobei der Kolben (140) zu einer Endstellung der Druckkammer (DK) vorgespannt ist, um mit dem Hydraulikfluid in der Druckkammer (DK) zusammenzuwirken, wobei der Kolben (140) in einem vorbestimmten Bereich zum Speichern von Hydraulikfluid beweglich ist,
**gekennzeichnet durch** mindestens eine Auslassöffnung (111) in einer Seitenwand (112) der Laufbuchse (110), wobei die Auslassöffnung (111) durch den Kolben (140) in den vorbestimmten Bereich bedeckt ist und
freigelegt wird, wenn sich der Kolben (140) um eine vorbestimmte Strecke von der Endstellung bewegt hat.

2. Druckspeicher (100) nach Anspruch 1, wobei eine Niederdruckkammer (114) Hydraulikfluid empfängt, das aus der mindestens einen Auslassöffnung (111) ausgetragen wird.

3. Druckspeicher (100) nach Anspruch 1, wobei die Laufbuchse (110) um die Druckkammer (DK) herum aus einem polymeren Material, wie zum Beispiel Polyphenylensulfid, hergestellt ist.

4. Druckspeicher (100) nach Anspruch 2, wobei ein Durchgang (113) vorgesehen ist, um die Niederdruckkammer (114) mit einer Niederdruckseite des Druckspeichers (100) zu verbinden.

5. Druckspeicher (100) nach Anspruch 2, wobei ein Durchgang vorgesehen ist, um die Niederdruckkammer (114) mit einem Behälter (20) zu verbinden.

6. Druckspeicher (100) nach Anspruch 1, 2, 3 oder 4, der weiterhin eine Feder (151, 152, 153) auf einer Niederdruckseite des Druckspeichers (100) zur Vorspannung des Kolbens (140) zu einer oberen Endstellung in der Druckkammer (DK) umfasst.

7. Druckspeicher (100) nach einem vorhergehenden Anspruch, der weiterhin einen Ablauf (205) einer Steuerkomponente (40) umfasst, wobei der Ablauf mit einer Niederdruckseite des Speichers (100) verbunden ist.

8. Druckspeicher (100) nach Anspruch 1, der weiterhin eine Überlauf (201) auf einer Niederdruckseite des Druckspeichers zwischen einem Innenraum des Druckspeichers (100) und einen zu einem Behälter (20) führenden Kanal umfasst.

9. Druckspeicher (100) nach Anspruch 1, wobei die mindestens eine Auslaßöffnung (111) einen Durchmesser aufweist, der kleiner als eine Breite eines Kolbenrings (141) des Kolbens (140) ist.

10. Hydrauliksystem, das eine Hydraulikpumpe (10), eine Steucrkomponente (40) und einen hydraulischen Aktuator (50) umfasst, wobei das System weiterhin einen Druckspeicher (100) nach einem vorhergehenden Anspruch umfasst.

11. Allradantriebskupplung, die ein Hydrauliksystem nach Anspruch 10 umfasst.

## Revendications

1. Accumulateur (100) pour un système hydraulique, l'accumulateur (100) comprenant :
une chemise (110), un piston (140) et un boîtier (200), définissant une chambre de pression (PC), pour recevoir du fluide hydraulique à haute pression,
dans lequel le piston (140) est contraint vers une position d'extrémité de la chambre de pression (PC) pour interagir avec le fluide hydraulique dans la chambre de pression (PC), ledit piston (140) étant mobile dans une plage prédéterminée pour accumuler du fluide hydraulique,
**caractérisé par** au moins un orifice de sortie (111) dans une paroi latérale (112) de la chemise (110), lequel orifice de sortie (111) est couvert par ledit piston (140) dans ladite plage prédéterminée et est découvert lorsque ledit piston (140) s'est déplacé d'une distance prédéterminée de ladite position d'extrémité.

2. Accumulateur (100) selon la revendication 1, dans lequel une chambre de basse pression (114) reçoit du fluide hydraulique qui est évacué dudit au moins un orifice de sortie (111).

3. Accumulateur (100) selon la revendication 1, dans lequel la chemise (110) autour de la chambre de pression (PC) est constituée d'un matériau polymérique, comme du polysulfure de phénylène.

4. Accumulateur (100) selon la revendication 2, dans lequel un passage (113) est fourni pour interconnecter la chambre de basse pression (114) avec un côté de basse pression de l'accumulateur (100).

5. Accumulateur (100) selon la revendication 2, dans lequel un passage est fourni pour interconnecter la chambre de basse pression (114) avec un réservoir (20).

6. Accumulateur (100) selon la revendication 1, 2, 3 ou 4, comprenant en outre un ressort (151, 152, 153) sur un côté de basse pression de l'accumulateur (100), pour contraindre le piston (140) vers une position d'extrémité supérieure dans la chambre de pression (PC).

7. Accumulateur (100) selon l'une quelconque des revendications précédentes, comprenant en outre un drain (205) d'un composant de régulation (40), lequel drain est connecté sur un côté de basse pression de l'accumulateur (100).

8. Accumulateur (100) selon la revendication 1, comprenant en outre un trop-plein de déversement (201) sur un côté de basse pression de l'accumulateur entre un intérieur de l'accumulateur (100) et un canal (202) conduisant à un réservoir (20).

9. Accumulateur (100) selon la revendication 1, dans lequel ledit au moins un orifice de sortie (111) a un diamètre qui est inférieur à une largeur d'un segment (141) du piston (140).

10. Système hydraulique comprenant une pompe hydraulique (10), un composant de régulation (40) et un actionneur hydraulique (50), dans lequel le système comprend en outre un accumulateur (100) selon l'une quelconque des revendications précédentes.

11. Accouplement à quatre roues motrices comprenant un système hydraulique selon la revendication 10.
